# EUROPEAN PATENT APPLICATION

(11) **EP 1 942 388 A1**
(43) Date of publication of application: **09.07.2008**
(21) Application number: 07124032.9
(22) Date of filing: 21.12.2007
(51) Int. Cl.: G05D 1/08, B64C 13/00

(54) **Active pilot flight control stick system with passive electromagnetic feedback**

(30) Priority: 03.01.2007 US 649011
(71) Applicant: Honeywell International Inc., Morristown, New Jersey 07962 (US)
(72) Inventor: Hanlon, Casey, Queen Creek, AZ 85242 (US); Potter, Calvin C., Mesz, AZ 85206 (US); Wingett, Paul T., Mesa, AZ 85202 (US); Wilkens, Dean R., Scottsdale, AZ 85262 (US); Abel, Stephen G., Chandler, AZ 85226 (US)
(74) Representative: Buckley, Guy Julian

(57) **Abstract**

A pilot flight control stick haptic feedback mechanism provides variable force feedback to the pilot flight control stick. The flight control stick is movable to a control position in a displacement direction. A motor control unit is operable to selectively supply motor feedback signals to a motor that is coupled to the flight control stick. The motor is responsive to the motor feedback signals to supply a variable feedback force to the flight control stick in a direction that opposes the displacement direction. A passive electromagnetic damping mechanism is electrically coupled to the motor and is at least selectively and passively supplies a non-braking damping force to the flight control stick.

## Description

### TECHNICAL FIELD

The present invention relates to flight control sticks and, more particularly, to a pilot flight control stick feedback system that supplies haptic feedback to the pilot.

### BACKGROUND

Aircraft typically include a plurality of flight control surfaces that, when controllably positioned, guide the movement of the aircraft from one destination to another. The number and type of flight control surfaces included in an aircraft may vary, but typically include both primary flight control surfaces and secondary flight control surfaces. The primary flight control surfaces are those that are used to control aircraft movement in the pitch, yaw, and roll axes, and the secondary flight control surfaces are those that are used to influence the lift or drag (or both) of the aircraft. Although some aircraft may include additional control surfaces, the primary flight control surfaces typically include a pair of elevators, a rudder, and a pair of ailerons, and the secondary flight control surfaces typically include a plurality of flaps, slats, and spoilers.

The positions of the aircraft flight control surfaces are typically controlled using a flight control surface actuation system. The flight control surface actuation system, in response to position commands that originate from either the flight crew or an aircraft autopilot, moves the aircraft flight control surfaces to the commanded positions. In most instances, this movement is effected via actuators that are coupled to the flight control surfaces.

Typically, the position commands that originate from the flight crew are supplied via some type of input control mechanism. For example, many aircraft include two yoke and wheel type of mechanisms, one for the pilot and one for the co-pilot. Either mechanism can be used to generate desired flight control surface position commands. More recently, however, aircraft are being implemented with side stick type mechanisms. Most notably in aircraft that employ a fly-by-wire system. Similar to the traditional yoke and wheel mechanisms, it is common to include multiple side sticks in the cockpit, one for the pilot and one for the co-pilot. Most side sticks are implemented with some type of feedback mechanism for providing force feedback (or "haptic feedback") to the user, be it the pilot or the co-pilot. In some implementations, the haptic feedback mechanism is an active mechanism that includes one or more electrically controlled motors to supply force feedback to the side stick(s).

Although unlikely, it is postulated that the electrically controlled motor, or other electrical or mechanical portions of the feedback mechanism, could become inoperable. Thus, in addition to the active feedback mechanism, many aircraft side sticks are also implemented with one or more passive feedback mechanisms, such as one or more springs. These backup mechanisms, while useful, can present certain drawbacks. For example, these passive feedback mechanisms can exhibit postulated common mode failures, which can adversely impact overall system reliability.

Hence, there is a need for a passive haptic feedback mechanism for active pilot control sticks that exhibits relatively small impact overall system reliability and/or does not introduce postulated common mode failures. The present invention addresses one or more of these needs.

### BRIEF SUMMARY

The present invention provides an aircraft flight control surface actuation haptic feedback system that includes a flight control stick, a motor control unit, a motor, and a passive electromagnetic damping mechanism. The flight control stick is adapted to receive an input force supplied by a pilot and is configured, upon receipt of the input force, to move at least a portion thereof to a control position in a displacement direction. The motor control unit is operable to selectively supply motor feedback signals. The motor is coupled to the flight control stick and to receive the motor feedback signals. The motor is operable, upon receipt of the motor feedback signals, to supply a variable feedback force to the flight control stick in a direction that opposes the displacement direction. The passive electromagnetic damping mechanism is electrically coupled to the motor and is operable to at least selectively and passively supply a non-braking damping force to the flight control stick.

In another exemplary embodiment, an aircraft flight control surface actuation haptic feedback system includes a flight control stick, a motor control unit, and a passively damped brusheless DC motor. The flight control stick is adapted to receive an input force supplied by a pilot and is configured, upon receipt of the input force, to move at least a portion thereof to a control position in a displacement direction. The motor control unit is operable to selectively supply motor feedback signals. The passively damped brushless DC motor is coupled to the flight control stick and to receive the motor feedback signals. The motor is operable, upon receipt of the motor feedback signals, to supply a variable feedback force to the flight control stick in a direction that opposes the displacement direction. The motor includes a permanent magnet rotor, a multi-phase drive stator, and a multi-phase damping stator. The rotor is rotationally mounted and is coupled to the flight control stick. The multi-phase drive stator at least partially surrounds at least a portion of the permanent magnet rotor and is coupled to receive the motor feedback signals. Each phase of the multi-phase drive stator includes a first number of turns. The multi-phase damping stator at least partially surrounds at least a portion of the permanent magnet rotor. Each phase of the multi-phase damping stator includes a second number of turns that is less than the first number of turns.

In yet another exemplary embodiment, an aircraft flight control surface actuation system includes a flight control stick, a motor control unit, a motor, and a plurality of electrical resistor circuits. The flight control stick is adapted to receive an input force supplied by a pilot and is configured, upon receipt of the input force, to move at least a portion thereof to a control position in a displacement direction. The motor control unit is operable to selectively supply motor feedback signals. The motor is coupled to the flight control stick and to receive the motor feedback signals. The motor is operable, upon receipt of the motor feedback signals, to supply a variable feedback force to the flight control stick in a direction that opposes the displacement direction. The motor includes a rotationally mounted permanent magnet rotor coupled to the flight control stick, and a multi-phase stator at least partially surrounding the permanent magnet rotor that is coupled to receive the motor feedback signals. Each electrical resistor circuit has a substantially fixed amount of electrical resistance and is electrically coupled in parallel with one phase of the multi-phase stator, whereby the motor is passively damped.

Other independent features and advantages of the preferred feedback mechanism will become apparent from the following detailed description, taken in conjunction with the accompanying drawings which illustrate, by way of example, the principles of the invention.

### BRIEF DESCRIPTION OF THE DRAWINGS

FIG. 1 is a perspective view of an exemplary aircraft depicting primary and secondary flight control surfaces;

FIG. 2 is a schematic depicting portions of an exemplary flight control surface actuation system according one embodiment of the present invention;

FIG. 3 is a functional block diagram of the flight control surface actuation system of FIG. 2, depicting certain portions thereof in slightly more detail;

FIG. 4 is a schematic representation of a motor that may be used to implement the systems depicted in FIGS. 1-3, and that includes an exemplary passive electromagnetic damping mechanism;

FIG. 5 is a schematic representation of a motor that may be used to implement the systems depicted in FIGS. 1-3, and that includes another exemplary passive electromagnetic damping mechanism;

FIG. 6 is a cross section view of a portion of an exemplary motor that may include the passive electromagnetic damping mechanism of either FIGS. 4 or 5;

FIG. 7 is a schematic representation of a motor that may be used to implement the systems depicted in FIGS. 1-3, and that includes yet another exemplary passive electromagnetic damping mechanism; and

FIG. 8 is a schematic representation of another motor that includes the passive electromagnetic damping mechanism depicted in FIG. 7.

### DETAILED DESCRIPTION OF A PREFERRED EMBODIMENT

The following detailed description of the invention is merely exemplary in nature and is not intended to limit the invention or the application and uses of the invention. Furthermore, there is no intention to be bound by any theory presented in the preceding background of the invention or the following detailed description of the invention.

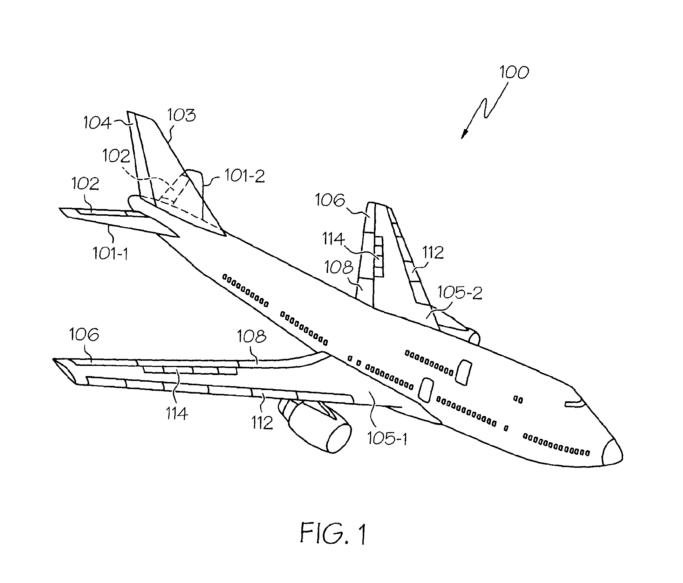

Turning first to FIG. 1, a perspective view of an exemplary aircraft is shown. In the illustrated embodiment, the aircraft 100 includes first and second horizontal stabilizers 101-1 and 101-2, respectively, a vertical stabilizer 103, and first and second wings 105-1 and 105-2, respectively. An elevator 102 is disposed on each horizontal stabilizer 101-1, 101-2, a rudder 104 is disposed on the vertical stabilizer 103, and an aileron 106 is disposed on each wing 105-1, 105-2. In addition, a plurality of flaps 108, slats 112, and spoilers 114 are disposed on each wing 105-1, 105-2. The elevators 102, the rudder 104, and the ailerons 106 are typically referred to as the primary flight control surfaces, and the flaps 108, the slats 112, and the spoilers 114 are typically referred to as the secondary flight control surfaces.

The primary flight control surfaces 102-106 control aircraft movements about the aircraft pitch, yaw, and roll axes. Specifically, the elevators 102 are used to control aircraft movement about the pitch axis, the rudder 104 is used to control aircraft movement about the yaw axis, and the ailerons 106 control aircraft movement about the roll axis. It is noted, however, that aircraft movement about the yaw axis can also be achieved by varying the thrust levels from the engines on opposing sides of the aircraft 100. It will additionally be appreciated that the aircraft 100 could include horizontal stabilizers (not shown).

The secondary control surfaces 108-114 influence the lift and drag of the aircraft 100. For example, during aircraft take-off and landing operations, when increased lift is desirable, the flaps 108 and slats 112 may be moved from retracted positions to extended positions. In the extended position, the flaps 108 increase both lift and drag, and enable the aircraft 100 to descend more steeply for a given airspeed, and also enable the aircraft 100 get airborne over a shorter distance. The slats 112, in the extended position, increase lift, and are typically used in conjunction with the flaps 108. The spoilers 114, on the other hand, reduce lift and when moved from retracted positions to extended positions, which is typically done during aircraft landing operations, may be used as air brakes to assist in slowing the aircraft 100.

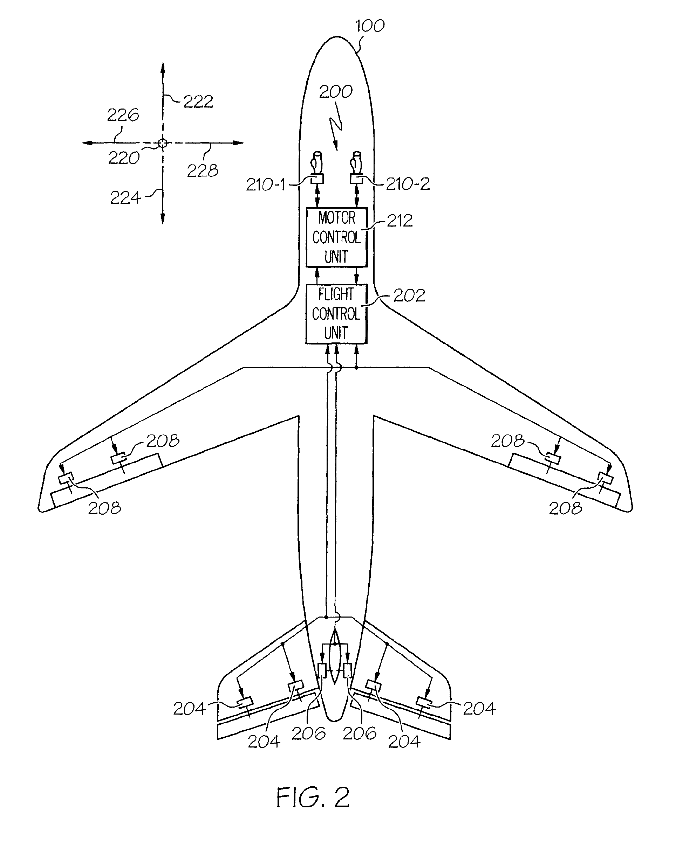

The flight control surfaces 102-114 are moved to commanded positions via a flight control surface actuation system 200, an exemplary embodiment of which is shown in FIG. 2. In the depicted embodiment, the flight control surface actuation system 200 includes one or more flight control units 202, a plurality of primary flight control surface actuators, which include elevator actuators 204, rudder actuators 206, and aileron actuators 208. It will be appreciated that the system 200 may be implemented with more than one flight control unit 202. However, for ease of description and illustration, only a single, multi-channel control unit 202 is depicted. It will additionally be appreciated that one or more functions of the control unit 202 could be implemented using a plurality of devices.

Before proceeding further, it is noted that the flight control surface actuation system 200 additionally includes a plurality of secondary control surface actuators, such as flap actuators, slat actuators, and spoiler actuators. However, the operation of the secondary flight control surfaces 108-114 and the associated actuators is not needed to fully describe and enable the present invention. Thus, for added clarity, ease of description, and ease of illustration, the secondary flight control surfaces and actuators are not depicted in FIG. 2, nor are these devices further described.

Returning now to the description, the flight control surface actuation system 200 may additionally be implemented using various numbers and types of primary flight control surface actuators 204-208. In addition, the number and type of primary flight control surface actuators 204-208 per primary flight control surface 102-106 may be varied. In the depicted embodiment, however, the system 200 is implemented such that two primary flight control surface actuators 204-208 are coupled to each primary flight control surface 102-106. Moreover, each of the primary flight control surface actuators 204-208 are preferably a linear-type actuator, such as, for example, a ballscrew actuator. It will be appreciated that this number and type of primary flight control surface actuators 204-208 are merely exemplary of a particular embodiment, and that other numbers and types of actuators 204-208 could also be used.

No matter the specific number, configuration, and implementation of the control units 202 and the primary flight control surface actuators 204-208, the control unit 202 is configured to receive aircraft flight control surface position commands from one or more input control mechanisms. In the depicted embodiment, the system 200 includes two user interfaces, a pilot user interface 210-1 and a co-pilot user interface 210-2, and one or more motor control units 212. As will be described in more detail below, the pilot 210-1 and co-pilot 210-2 user interfaces are both implemented as flight control sticks. It will be appreciated that in some embodiments, the system 200 could be implemented with more or less than this number of flight control sticks 210. It will additionally be appreciated that the system could be implemented with more than one motor control unit 212, and that each flight control unit 202 and each motor control unit 212 could be integrated into a single device. Nonetheless, the motor control unit 212, in response to position signals supplied from one or both flight control sticks 210, supplies flight control surface position signals to the flight control unit 202. The flight control unit 202, in response to the flight control surface position signals, supplies power to the appropriate primary flight control surface actuators 204-208, to move the appropriate primary flight control surfaces 102-106 to positions that will cause the aircraft 100 to implement the commanded maneuver.

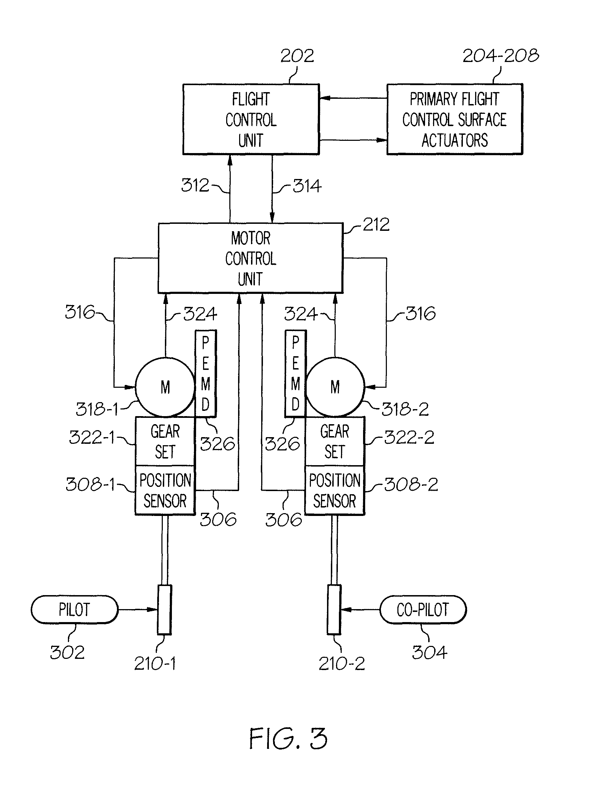

Turning now to FIG. 3, which is also a functional block diagram of the flight control surface actuation system 200 depicting portions thereof in slightly more detail, the flight control sticks 210 are each configured to move, in response to input from either a pilot 302 or a co-pilot 304, to a control position in a displacement direction. Although the configuration of the flight control sticks 210 may vary, in the depicted embodiment, and with quick reference to FIG. 2, each flight control stick 210 is configured to be movable, from a null position 220, to a control position in a forward direction 222, an aft direction 224, a port direction 226, a starboard direction 228, a combined forward-port direction, a combined forward-starboard direction, a combined aft-port direction, or a combined aft-starboard direction, and back to or through the null position 220. It will be appreciated that flight control stick movement in the forward 222 or aft 224 direction causes the aircraft 100 to implement a downward or upward pitch maneuver, respectively, flight control stick movement in the port 226 or starboard 228 direction causes the aircraft 100 to implement a port or starboard roll maneuver, respectively, flight control stick movement in the combined forward-port or forward-starboard direction, causes the aircraft 100 to implement, in combination, a downward pitch and either a port or a starboard roll maneuver, respectively, and flight control stick movement in the combined aft-port or aft-starboard direction, causes the aircraft 100 to implement, in combination, an upward pitch and either a port or a starboard roll maneuver, respectively.

Returning once again to FIG. 3, the flight control sticks 210, as noted above, are each configured to supply a position signal 306 to the motor control unit 212 that is representative of its position. To do so, a position sensor 308 (e.g., 308-1, 308-2) is coupled to each flight control stick 210. The position sensors 308 may be implemented using any one of numerous types of position sensors including, but not limited to, RVDTs and LVDTs. The motor control unit 212, upon receipt of the position signals 306, supplies flight control surface position signals 312 to the flight control unit 202, which in turn supplies power to the appropriate primary flight control surface actuators 204-208, to move the appropriate primary flight control surfaces 102-106 to the appropriate positions, to thereby implement a desired maneuver.

As FIG. 3 additionally depicts, the motor control unit 212 also receives one or more force feedback influence signals 314 from the flight control unit 202, and supplies motor drive signals 316 to a pilot motor 318-1, a co-pilot motor 318-2, or both. The motors 318, which are each coupled to one of the flight control sticks 210 via associated gears 322 (e.g., 322-1, 322-2) are each operable, upon receipt of the motor drive signals 316, to supply a feedback force to the associated flight control stick 210. The motor drive signals 316 may vary in magnitude based, for example, on the position of the flight control sticks 210 and various aircraft and control surface conditions, as represented by the one or more feedback influence signals 314. The motor drive signals 318 supplied to the pilot flight control stick 210-1 may also vary based on the position of the co-pilot flight control stick 210-2, and vice-versa. The flight control stick 210, in response to the feedback force supplied from the motor 318, supplies haptic feedback to the pilot 302 or co-pilot 304, as the case may be. In a particular preferred embodiment, the motor 318 is implemented as a brushless DC motor, and current feedback and commutation signals 324 are supplied to the motor control unit 212.

Before proceeding further it is noted that although, for ease of depiction and description, a single motor 318 is depicted and described as being coupled to each flight control stick 210, preferably more than one motor 318 is coupled to each flight control stick 210. In particular, at least two motors 318 are preferably coupled to each flight control stick 210, with one motor 318 configured to supply force feedback about a separate axis of rotation.

Returning to the description, in addition to supplying active haptic feedback to the pilot 302 and/or co-pilot 304, the system 200 additionally includes a plurality of passive damping mechanisms, one associated with each control stick 210. The passive damping mechanisms are each configured to passively damp to the flight control sticks 210 in the unlikely event the associated motor 318, the motor control unit 212, or various other electrical components become inoperable and prevent, or at least inhibit, active damping. Although the passive damping mechanisms may be implemented in accordance with any one of numerous techniques, in the depicted embodiment the passive damping mechanisms are implemented as electromagnetic (EM) damping mechanisms 326 (e.g., 326-1, 326-2). The passive EM damping mechanisms 326 are each electrically coupled to one of the motors 318, and each at least selectively and passively supplies a non-braking damping force to the associated flight control stick 210. That is, each passive EM damping mechanism 326 supplies a force to its associated flight control stick 210 that sufficiently damps flight control stick motion, without preventing flight control stick motion altogether. Hence, the passive EM damping mechanisms 326 passively supply adequate haptic feedback to the pilot 302 or co-pilot 304.

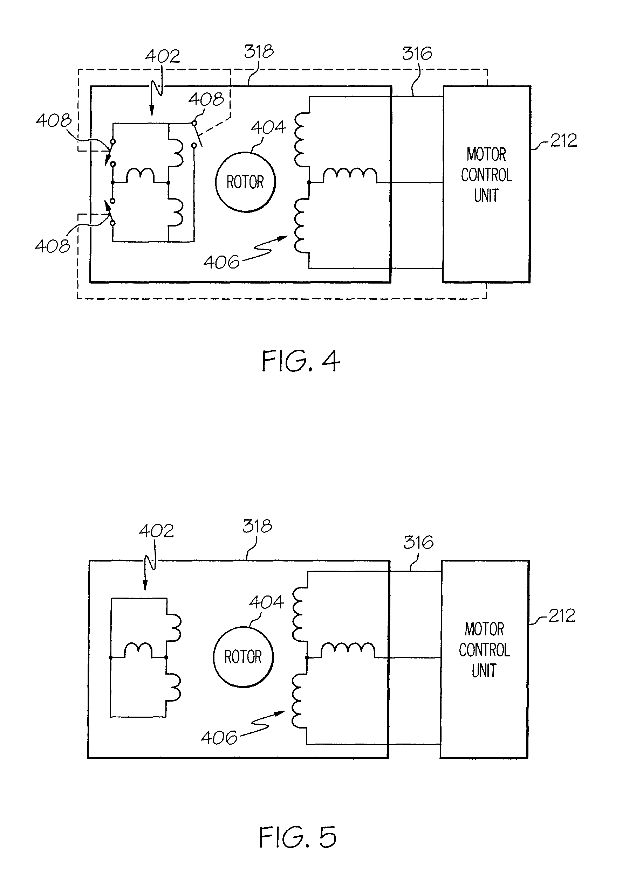

The passive EM damping mechanisms 326 may be implemented in accordance with various configurations. In one embodiment, which is depicted schematically in FIG. 4, each passive EM damping mechanism 326 is implemented as a damping stator 402. The damping stator 402 is preferably incorporated into the motor 318, which is also depicted schematically in FIG. 4, and will also be briefly described. In this regard, it was noted above that the motors 318 are each implemented as brushless DC motors. Although various types of brushless DC motors may be used, in a particular preferred embodiment, the motor 318 includes a permanent magnet rotor 404 and a multi-phase drive stator 406. The rotor 404 is rotationally mounted within a housing, and is coupled to its associated flight control stick 210. The drive stator 406 at least partially surrounds at least a portion of the rotor 404, and is coupled to receive the variable motor drive signals 316 from the motor control unit 212. More specifically, the motor control unit 212 selectively energizes, with the motor drive signals 316, selected phases of the drive stator 406, to thereby generate a rotating magnetic field. The permanent magnet rotor 404 electromagnetically interacts with the rotating the magnetic field, generating and supplying a feedback torque to the associated flight control stick 210. Although the drive stator 406 may include various numbers of phases, it preferably includes three phases.

The damping stator 402 also at least partially surrounds at least a portion of the rotor 404, and is also preferably implemented as a multi-phase stator. As with the drive stator 406, the damping stator 402 may be implemented with various numbers of phases, but is preferably implemented with three phases. No matter the specific number of phases, the damping stator 402 may be configured such that each phase is either permanently short-circuited to each other or selectively short-circuited to each other. In FIG. 4, the damping stator 402 is configured such that each phase is selectively short-circuit to each other, and thus includes a plurality of switches 408. The switches 408 are each configured to move between an open position, which is the position depicted in FIG. 4, and a closed position. In the open position the phases of the damping stator 402 are not short-circuited to each other. However, in the closed position the phases of the damping stator 402 are short-circuited to each other.

When the switches 408 are open, and the damping stator phases are not short-circuited to each other, the damping stator 402 will have no effect on motor 318 operations. However, when the switches 408 are closed, and the phases of the damping stator 402 are short circuited, any rotation of the permanent magnet rotor 404 will induce a voltage into the damping stator 402. This voltage, which is generally referred to as a back EMF (BEMF), will generate a counter-torque in the rotor 404, which is in turn supplied to the associated flight control stick 210 as a damping force. It is generally known that the magnitude of the BEMF, and thus the counter-torque, in a multi-phase stator is proportional to, among other factors, the number of turns per phase. Thus, the passive damping supplied by the damping stator 402 may be varied by, for example, varying the number of turns in each phase. No matter the specific number of turns per phase that each stator 402, 406 includes, the number of turns per phase of the damping stator 402 is preferably less than the number of turns per phase of the drive stator 406.

As FIG. 4 additionally depicts, the position of the switches 408 is controlled by the motor control unit 212. It will be appreciated, however, that this is merely exemplary, and that the switches 408 could be controlled by any one of numerous other external devices. No matter the particular control device that is used, the switches 408 are controlled such that each is in the open position when the motor 318 is operating properly to supply active force feedback to the appropriate flight control stick 210. However, in the unlikely event the motor 318 is no longer able to supply active force feedback, the switches 408 will be moved to the closed positions. As a result, the motor 318 will passively supply force feedback to the appropriate flight control stick 210. It will be appreciated that the inability to supply active force feedback to the flight control stick 210 may be due to a fault in the motor 318, the motor control unit 212, or any one or more of numerous electrical interconnections.

In another embodiment, which was alluded to above, and which is depicted in FIG. 5, the phases of the multi-phase damping stator 402 are continuously short-circuited to each other. In this embodiment, the damping stator 402 continuously generates a counter-torque in the rotor 404. During normal system operation, the continuously generated counter-torque is compensated for in the control law of the motor control unit 212. As with the embodiment depicted in FIG. 4 and described above, in the unlikely event the motor 318 is no longer able to actively supply force feedback, it will automatically supply force feedback passively via the damping stator 402 and rotor 404.

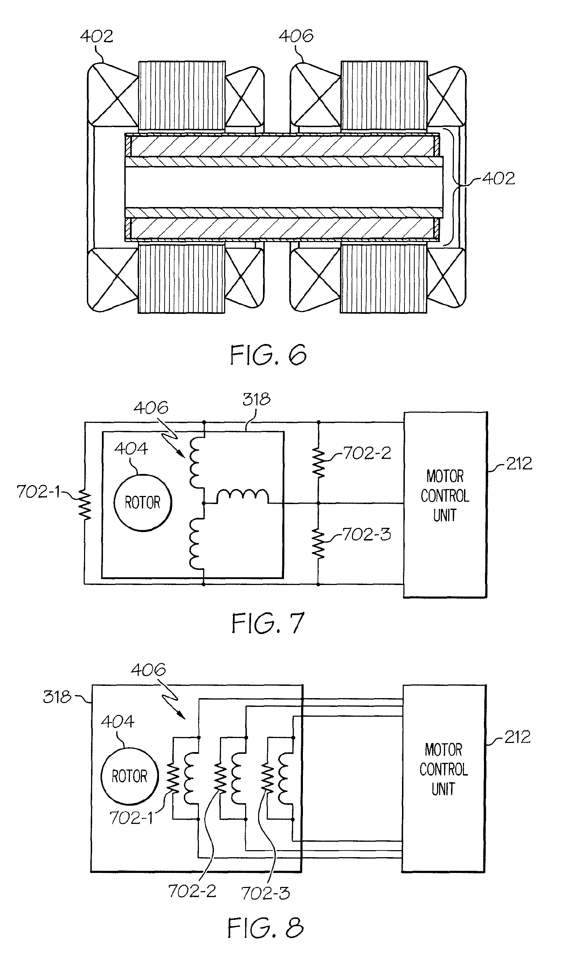

Before proceeding further, it is noted that the damping stator 402, the rotor 404, and drive stator 406 may be physically implemented in accordance with any one of numerous physical configurations. One particular physical implementation is depicted in FIG. 6, and shows the drive stator 406 surrounding a portion of the rotor 404, and the damping stator 404 spaced apart from the drive stator 406 and surrounding a different portion of the rotor 404.

Turning now to FIG. 7, yet another passive EM damping mechanism 326 is depicted and will be described. In this embodiment, the motor 318 includes the permanent magnet rotor 404 and the multi-phase drive stator 406, but does not include the multi-phase damping stator 402. Rather, the passive EM damping mechanism 326 is implemented via a plurality of electrical resistance circuits 702. More specifically, at least in the depicted embodiment, the passive EM damping mechanism 326 includes an electrical resistance circuits for each phase of the multi-phase drive stator 406. Thus, in the depicted embodiment, in which the multi-phase drive stator 406 includes three phases, the passive EM damping mechanism 326 includes three electrical resistance circuits 702-1, 702-2, 702-3.

No matter the specific number of phases and electrical resistance circuits 702, each electrical resistance circuit 702 is electrically coupled between two of the phases. Although each electrical resistance circuit 702 may be implemented using any one of numerous devices, each is preferably implemented using a single resistor. Moreover, although the specific electrical resistance that each electrical resistance circuit 702 represents may vary, preferably each exhibits an electrical resistance that is significantly greater than that of the drive stator windings. As a result, during normal operation, when the motor control unit 212 is commutating the motor 318 to supply active force feedback to the associated flight control stick 210, the power dissipated by the electrical resistance circuits 702 is limited.

If, during system 200 operation, the motor 318, the motor control unit 212, or various other electrical components become inoperable and prevent, or at least inhibit, active damping, any rotation of the permanent magnet rotor 404 will, due at least in part to the interconnections of the electrical resistance circuits 702, induce a BEMF into the drive stator 404. The BEMF, as previously described, will generate a counter-torque in the rotor 404, which is in turn supplied to the associated flight control stick 210 as a damping force. In this embodiment, the passive damping may be varied by, for example, varying the electrical resistance of each electrical resistance circuit 702.

It will be appreciated that the passive EM damping mechanism 326 depicted in FIG. 7 is not limited to use with Y-wound multi-phase drive stators 406, but may also be used with Δ-wound multi-phase drive stators 406. Moreover, the passive EM damping mechanism 326 may also be implemented in motors 318 implemented with multi-phase drive stators 406 that wound with separate stator windings. Such as, for example, the motor 318 depicted in FIG. 8, in which like reference numerals therein refer to like components in FIG. 7.

The passive EM damping mechanism 326 provides passive EM damping of, and hence supplies passive force feedback to, the flight control sticks 210 without short-circuiting the drive stator 406, which in turn allows the desired amount of passive damping to be designed into the motor 318, and no action need be actively performed by the motor control unit 212 to introduce the passive damping. Thus, overall system complexity is reduced and overall system reliability is increased.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An aircraft (100) flight control surface actuation haptic feedback system (200), comprising:
a flight control stick (210) adapted to receive an input force supplied by a pilot and configured, upon receipt of the input force, to move at least a portion thereof to a control position in a displacement direction;
a motor control unit (212) operable to selectively supply motor feedback signals (316);
a motor (318) coupled to the flight control stick (210) and to receive the motor feedback signals, the motor (318) operable, upon receipt of the motor feedback signals, to supply a variable feedback force to the flight control stick (210) in a direction that opposes the displacement direction; and
a passive electromagnetic damping mechanism (326) electrically coupled to the motor (318) and operable to at least selectively and passively supply a non-braking damping force to the flight control stick (210).

2. The system of Claim 1, wherein the motor (318) comprises:
a rotationally mounted permanent magnet rotor (404) coupled to the flight control stick (210); and
a multi-phase drive stator (406) at least partially surrounding the permanent magnet rotor (404) and coupled to receive the variable force feedback signals.

3. The system of Claim 2, wherein the passive electromagnetic damping mechanism (326) comprises a plurality of electrical resistor circuits (702), each electrical resistor circuit (i) having a substantially fixed amount of electrical resistance and (ii) electrically coupled in parallel with one phase of the multi-phase drive stator (406).

4. The system of Claim 2, wherein:
each phase of the multi-phase drive stator (406) includes a first number of turns; and
the passive electromagnetic damping mechanism (326) comprises a multi-phase damping stator (402) at least partially surrounding the permanent magnet rotor (404), each phase of the multi-phase damping stator (402) having a second number of turns that is less than the first number of turns.

5. The system of Claim 4, wherein each phase of the damping stator (402) is short-circuited to each other.

6. The system of Claim 4, wherein each phase of the damping stator (402) is selectively short-circuited to each other.

7. The system of Claim 6, further comprising:
a plurality of switches (408), each switch electrically coupled between two phases of the multi-phase damping stator (402) and movable between a first position, in which the two phases are short-circuited to each other, and a second position in which the two phases are not short-circuited to each other.

8. The system of Claim 1, wherein:
the flight control stick (210) is further configured, upon movement thereof to the control position, to supply a flight control stick position signals (306) representative of the control position; and
the motor control unit (212) is coupled to receive the flight control stick position control signals and is further operable, in response thereto, to supply one or more flight control surface position commands.

9. The system of Claim 8, further comprising:
one or more flight control stick position sensors (308) configured to sense the control position of the flight control stick (210) and operable to supply the flight control stick position signals (306).

10. The system of Claim 8, further comprising:
a plurality of flight control surface actuators (204), each actuator adapted to couple to a flight control surface and configured, upon being energized, to supply a drive force;
a flight control unit (202) coupled to receive the flight control surface position commands and operable, in response thereto, to selectively energize one or more of the flight control surface actuators (204).
